**Europäisches Patentamt**

**European Patent Office**

**Office européen des brevets**

(19)

(11) Veröffentlichungsnummer : **0 535 109 B1**

(12)

# EUROPÄISCHE PATENTSCHRIFT

(45) Veröffentlichungstag der Patentschrift :
**22.11.95 Patentblatt 95/47**

(51) Int. Cl.$^6$ : **F16H 1/32**

(21) Anmeldenummer : **91911964.4**

(22) Anmeldetag : **27.06.91**

(86) Internationale Anmeldenummer :
**PCT/DE91/00531**

(87) Internationale Veröffentlichungsnummer :
**WO 92/00473 09.01.92 Gazette 92/02**

(54) ZYKLOIDENGETRIEBE.

(30) Priorität : **27.06.90 DE 4020504**

(43) Veröffentlichungstag der Anmeldung :
**07.04.93 Patentblatt 93/14**

(45) Bekanntmachung des Hinweises auf die
Patenterteilung :
**22.11.95 Patentblatt 95/47**

(84) Benannte Vertragsstaaten :
**AT CH DE GB LI**

(56) Entgegenhaltungen :
**DE-A- 464 992**
**DE-A- 2 433 675**

(56) Entgegenhaltungen :
**FEINWERKTECHNIK + MESSTECHNIK. Bd.**
**88, Nr. 7, November 1980, MüNCHEN, DE Sei-**
**ten 351 - 355; M.LEHMANN: 'Flankenspiel bei**
**Verzahnungen mit Zykloidenkurvenscheiben '**
**siehe Seite 351, Absatz 3 - Seite 355, Absatz 8;**
**Abbildungen**

(73) Patentinhaber : **Braren, Rudolf**
**Ernsdorf 12**
**D-83209 Prien (DE)**

(72) Erfinder : **Braren, Rudolf**
**Ernsdorf 12**
**D-83209 Prien (DE)**

(74) Vertreter : **Flügel, Otto, Dipl.-Ing.**
**Lesser & Flügel,**
**Postfach 81 05 06**
**D-81905 München (DE)**

## Beschreibung

Die Erfindung betrifft ein Verfahren zur Herstellung eines Übersetzungsgetriebes, insbesondere Planetengetriebes, mit den Merkmalen des Oberbegriffes des Anspruches 1, wie es insbesondere in der DE-PS 24 33 675 und in bevorzugten Ausgestaltungen in den DE-OS 32 06 992, 34 18 866 und 34 31 123 beschrieben sind. In der DE-PS 24 33 675 sind zum Stand der Technik die DE-PS 464 992 und 15 75 003 genannt, die zum Zwecke des als erforderlich angesehenen Eingriffspieles zwischen der Kurvenscheibe und dem Rollenkranz einen derart geänderten Kurvenzug aufweist, daß man ihn mit einer Verringerung der Parameter q und r gegenüber der jeweiligen Bezugszykloide beschreiben kann, während die Lehre nach der DE-PS 24 33 675 demgegenüber eine Änderung des Kurvenscheiben-Zykloidenverlaufes gegenüber der zugehörigen Bezugszykloide aufweist, die sich in einer Vergrößerung der Parameter q und r äußert.

Die bis zum Anmeldetag der DE-PS 24 33 675 bekannten Zykloidengetriebe wurden hinsichtlich ihres Kurvenverlaufes ausschließlich empirisch ermittelt. Ein für die hier in Rede stehenden Getriebe maßgeblicher Zykloiden-Kurvenzug ist durch vier Parameter bestimmt, nämlich r, q, e und z, wie dies die Darlegungen in den vorerwähnten Druckschriften ausführlich darlegen; ergänzend wird auf die Habilitationsschrift M. Lehmann "Die Beschreibung der Zykloiden, ihrer Äquidistanten und Hüllkurven", TU-München 1981 verwiesen.

In der DE-PS 24 33 675 wird erstmalig der Aufbau eines Zykloidengetriebes nach mathematisch beschreibbarer Kurvengestalt offenbart. Dies geschieht dort anhand der Begriffe Bezugszykloide und Kurvenscheibenzykloide, wobei die Kurvenscheibenzykloide zur Sicherstellung des erforderlichen Spiels zwischen den Getriebescheiben sich von der Bezugszykloide durch eine dieser gegenüber vergrößerten Ausführung der Parameter q und r bemißt. Die bis zu diesem Zeitpunkt bekannten, geänderten Kurvenscheibenzykloiden, die mathematisch nicht exakt durch Zykloidengleichen beschrieben wurden, lassen sich ihrem Charakter nach durch eine Verkleinerung der Werte für r und q gegenüber dem gleichnamigen Kurvenscheibenzykloide beschreiben.

Es wurde also gegenüber dem Stand der Technik bis zum Anmeldetag der DE-PS 24 33 675 keinerlei Lehre gegeben, die Parameter q und r der geänderten Zykloide größer als die der Bezugszykloide zu wählen. Dieser erhebliche Fortschritt, der sich im übrigen in einem weitaus besseren Getriebeverhalten niederschlägt, überläßt es dem Fachmann allerdings die Parameterabweichungen zu bestimmen, was auf ein Ausprobieren mit entsprechendem Aufwand hinausläuft und allenfalls in einer "geschickten Wahl" der Parameterabweichungen seinen Niederschlag gefunden hat.

Der Erfindung liegt die Aufgabe zugrunde, den Fachmann in die Lage zu versetzen, ohne das Erfordernis des Ausprobierens und damit in aller Regel wiederholter Kurvenscheibenausführungen für ein und dasselbe Getriebe in Richtung eines optimierten Eingriffes der Getriebeteile ein Zykloidengetriebe der in Rede stehenden Art nach den jeweiligen Betriebsanforderungen bereits im Status der Getriebeauslegung bestimmen zu können.

Ausgehend von einem Übersetzungsgetriebe mit den Merkmalen des Oberbegriffes des Anspruches 1 wird diese Aufgabe erfindungsgemäß durch dessen kennzeichnende Merkmale gelöst.

Durch das erfindungsgemäße Vorgehen bzw. die Bemessung des Getriebes wird dem Fachmann die Lehre erteilt, anhand einer geläufigen Qualitätsvorstellung genormter Paarungen einen exakten Zahlenwert zu ermitteln, der mit der zusätzlichen Angabe des maximalen Eingriffswinkels zur mathematisch bestimmten Festlegung der Parameteränderungen von den gleichnamigen Parametern der Bezugszykloide führt. Die Bezugszykloide ist einschließlich des Winkels max durch die Getriebeeigenschaften bestimmt, die sich aus dem geforderten Übersetzungsverhältnis und dem zu übertragenden Drehmoment ergeben. Die dem Fachmann geläufige Qualitätsvorstellung einer Paarung führt nach Anspruch 1 (die dortige Tabelle) zu einer eindeutigen zahlenmäßigen Bestimmung des im Rahmen der Erfindung eingeführten Paarungswertes c.

Es gibt eine Vielzahl von Getriebeausführungen der in Rede stehenden Art, die der grundsätzlichen Charakteristik nach in Anspruch 1 erfaßt ist. Bevorzugt werden Planetengetriebe verwendet, deren EPI-Kurvenscheibenzykloide dem Planetenrad und deren Bezugszykloide dem Hohlrad zugeordnet ist. Nach den Anweisungen der Unteransprüche können die geforderten Qualitäten sowohl auf die real ausgeführte Kurvenscheibenzykloide als auch auf die durch die Eingriffspunkte zwischen der Kurvenscheibenzykloide und dem Bolzenring bestimmte Bezugszykloide angewandt werden. Es ist andererseits möglich, die Qualität die der Auswahl des Paarungswertes c zugrundeliegt, entweder bei der Bemessung des Bolzenringes oder bei derjenigen der Kurvenscheibe um eine Stufe zu ändern. Es ist im Rahmen der erfindungsgemäßen Lehre weiterhin möglich, die einzelnen Parameteränderungen bzw. Qualitätsvorstellungen gemischt der Abmessung des Bolzenringes und der Kurvenscheibe zuzuordnen.

Erfindungsgemäß ist weiterhin eine Vorrichtung zur Herstellung des vorgeschilderten Übersetzungsgetriebes vorgesehen, die sich dadurch auszeichnet, daß nach Eingabe der geforderten Betriebsparameter ausschließlich noch die Eingabe des Paarungswertes c der gewünschten Qualität erforderlich ist.

Die Erfindung wird anhand der beiliegenden Figuren im Folgenden beispielhaft näher erläutert. Es zeigen

Figur 1    einen Querschnitt eines Übersetzungsgetriebes nach I-I in Figur 2, wie es als Beispiel der DE-OS 32 06 992 zugrundeliegt;

Figur 2    einen Längsschnitt nach der Linie II-II in Figur 1;

Figur 3    eine Schemaskizze zur Erzeugung einer Flanke eines EPI-Zykloidenkurvenzuges;

Figur 4    eine Schemaskizze zur Erzeugung der gleichen Flanke wie in Figur 3, jedoch mit Erzeugung durch die Glieder r, n und e (z+1) der Getriebekette O, C und N;

Figur 5    Schemaskizze nach Vorstellung gemäß Figur 4 zur Verdeutlichung der erfindungsgemäßen Maßnahme durch den "c-Paarungswert" bei einer Parametervergrößerung;

Auf einem Exzenterkörper 1, der durch den kinematischen Ablauf zentral gelagert ist (siehe Patentschriften u.a. DE-OS 32 06 992) sind ein Exzenterlager 7 mit der Exzentrizität e=OM und weiter zwei Exzenterlager 7.1, 7.2 mit der Exzentrizität e=OM' um 180° gegeneinander versetzt angeordnet.

Über die Exzenterlager 7 und 7.1, 7.2 sind die mit je einem geschlossenen Zykloidenzug 11 und 11.1, 11.2 versehenen Kurvenscheiben 13 und 13.1, 13.2 gelagert. Die geschlossenen Zykloidenzüge 11 und 11.1, 11.2 sind im Eingriff mit den Bolzen 16, welche konzentrisch um die Zentralachse O-O im Bolzenring 4 festgelegt sind.

Mit diesem Eingreifen wird die formschlüssige und wälzende Paarung nach dem Verzahnungsgesetz bewirkt.

In den Kurvenscheiben 13 und 13.1, 13.2 sind konzentrisch zur Drehachse M-M bzw. M'-M' Bohrungen 17 und 17.1, 17.2 angeordnet worin die auf Bolzen 19 gelagerten Rollen 20 greifen, welche auf der einen Seite in einen Flansch 21 der Abtriebwelle 6 und auf der anderen Seite über Klemmringe 30 mit Druckstücken 31 und Schrauben 32 in einem Flansch 21.1 der Abtriebswelle 6 konzentrisch um deren Drehachse 0-0 festgelegt sind.

Die Abtriebswelle 6 ist im Bolzenring 4 über die Wälzlager 22, 23 gelagert. Der Bolzenring 4 wird in bekannter Weise durch Deckel 24, 25 abgeschlossen und durch Dichtelemente 26, 27 nach außen abgeschlossen.

Wird die Abtriebwelle 6, wie in der gezeigten Ausführung mit einer Bohrung versehen, um den Antrieb wahlweise von jeder Seite des Getriebes zu ermöglichen, so ist ein weiteres Dichtelement 27.1 erforderlich. Die Schrauben 28 befestigen die beiden Deckel 24, 25 und können der Festlegung des Getriebes dienen.

Je nachdem, welcher Zweck mit dem Getriebe erreicht werden soll, kann man eines oder zwei der Teile 1, 6, 4 antreiben.

Getriebe sind Einrichtungen zum Umformen, hier von Drehzahlen und Momenten. Ein Getriebe besteht aus Gliedern; eines davon muß als Gestell festgelegt sein.

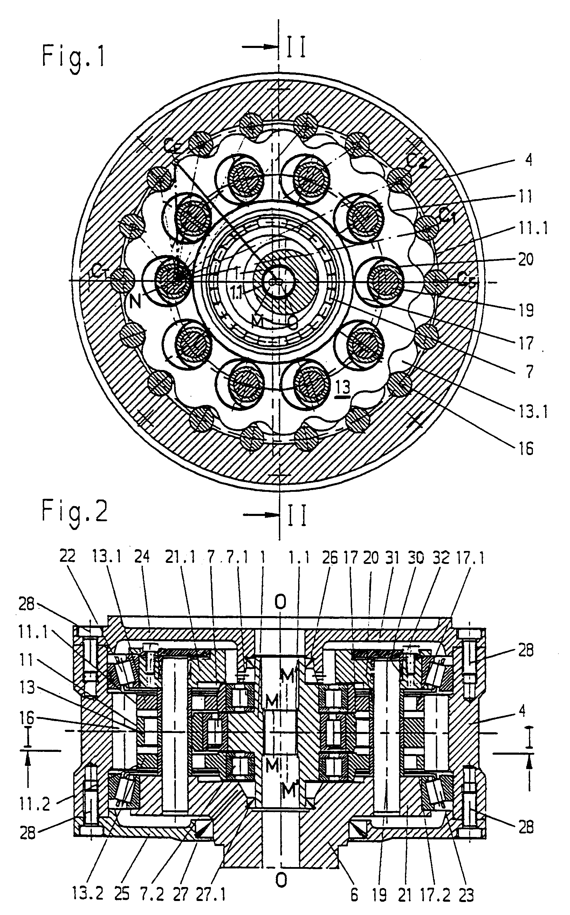

Das gesamte Getriebe nach Fig. 1 und 2 - mit Ausnahme der bekannten Kupplung als Abtriebssystem - kann kinematisch, wie nachfolgend beschrieben, auf die Getriebekette 0, C, N; reduziert werden. In der Zentralachse 0-0 liegt das Gelenk 0, eines der Mittelpunkte der Bolzen 16 des Bolzenringes 4 ist jeweils das Gelenk C; das Gelenk N ist ein Zwiegelenk und wirkt als Momentanpol. Der Teilungswinkel zwischen zwei der Bolzen 16 entspricht dem Erzeugungswinkel von $\beta$ und $\alpha$ beträgt 360°/(z+1).

Im Standgetriebe, auch Umlaufgetriebe genannt, mit umlaufendem Bolzenring 4 um 0 und umlaufenden Kurvenscheiben 13 um M-M und 13.1, 13.2 und M'-M' sind die Gelenke 0 und M gestellfest.

Bekanntlich nimmt dieses Standgetriebe durch Gestellwechsel, beispielsweise auf die Gelenke 0 und C, die Funktion eines Planetengetriebes ein. Die Linien vom Gelenk 0 jeweils zum Mittelpunkt C der Bolzen 16 stellen in ihren Berührungs-Punkten Q im Abstand q jeweils von C aus mit der Kurvenscheibenzykloide 13 und 13.1, 13.2 die Normalen zur Zykloide 11 und 11.1, 11.2 dar und liefern damit den Beweis für das Verzahnungsgesetz und zugleich für die Bezugszykloide.

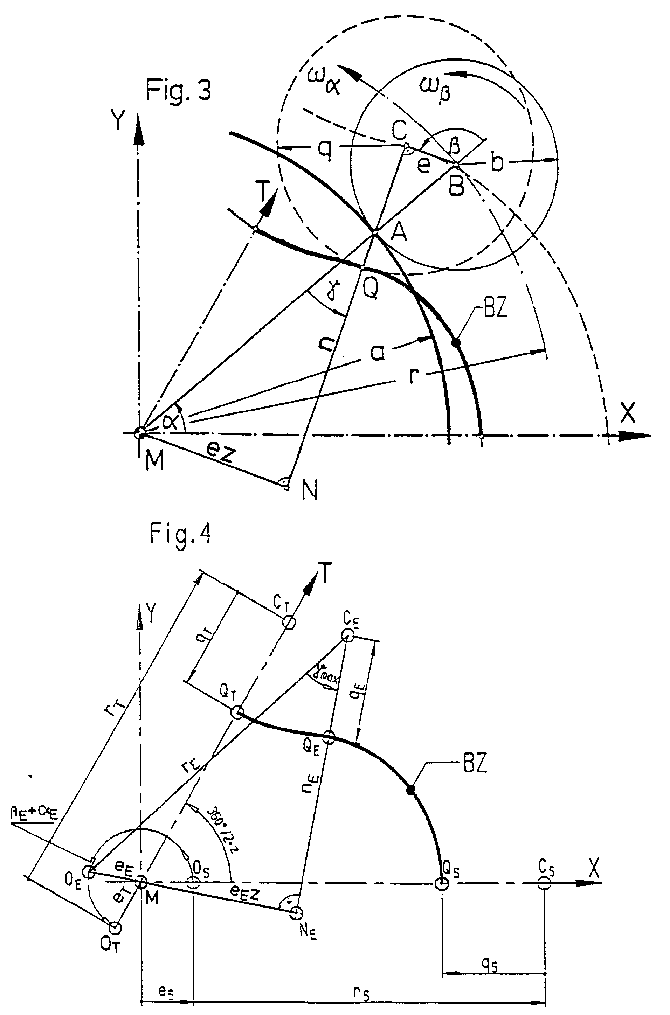

Nach Fig. 3 kann schematisch die Erzeugung einer Flanke eines EPI-Zykloidenzuges von Scheitel- über Eingriffs- zur Talstellung mittels bekanntem Abwälzen des Rollkreises mit dem Radius b auf dem gestellfesten Grundkreis mit dem Radius a. also mit den Gliedern r, e, q, erfolgen. Diese Skizze wurde mit derselben Darstellung und Bezeichnung der Patentschrift DE 24 33 675 entnommen und soll hier ebenfalls volle Gültigkeit erlangen.

Nach Fig. 4 kann schematisch die Erzeugung derselben Flanke wie nach Figur 3 auch mit den Gliedern r, n und (e + e . z) erfolgen. Mit dieser Darstellung läßt sich der Gestellwechsel von der Erzeugung nach Fig. 4 mit Gestellgelenk M als Zykloiden-Mitte zum Ablauf nach Figur 1 und mit Gestellgelenk 0 als Bolzenring-Mitte leichter nachvollziehen. In der Fig. 4 wird mit den Indizes "S" die Scheitel-mit "E" die Eingriffs- und mit "T" die Talstellung gekennzeichnet.

Die Talstellung unterscheidet sich nur von der Scheitelstellung durch Richtungs-Umkehr des Gliedes e. In beiden Stellungen wird die Getriebe-Kette zu einer Geraden.

Der Winkel $\gamma$ zwischen den Gliedern r und n bei Gelenk C besitzt in der Scheitel-und Talstellung den Wert Null und erreicht in der sogenannten Eingriffsstellung beim Winkelwert von 90° zwischen den Gliedern n und e(z+1) bei Gelenk N sein Maximum.

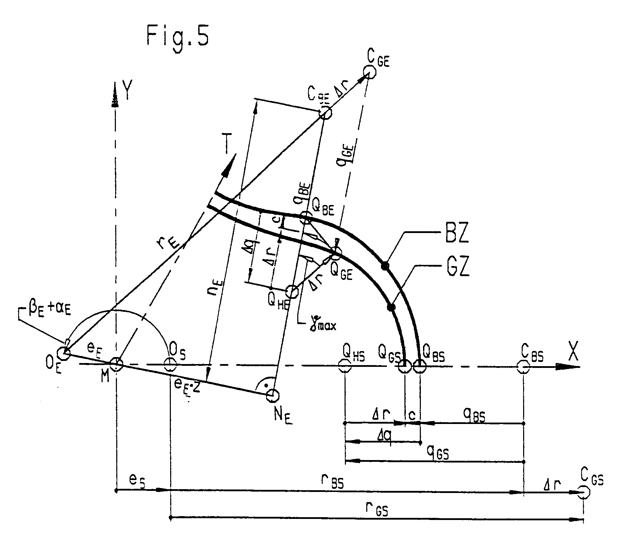

Die Erfindung wird in Fig. 5 schematisch für Scheitel- und Eingriffsstellung durch Überführung einer Bezugszykloide BZ in eine Kurvenscheibenzykloide GZ durch Parametervergrößerung dargestellt:

<u>Ausgang: Bezugszykloide BZ</u>  mit Parameter: $r_B$; $q_B$;

<u>Ausführung: Kurvensch.-Zykloide GZ</u>

  mit Parameter: $qG = q_B + \Delta_q$;

  und mit: $rG = r_B + \Delta r$;

Im maximalen Eingriff liegt der Punkt QGE der Kurvenscheibenzykloide GZ auf einer μm-Bereich annähernden Geraden, welche parallel ist zum Glied e(z+1) und das Dreieck QGE, QBE, QHE in zwei weitere Dreiecke teilt.

Die gesuchte Beziehung für den "c - **Paarungswert**" für die Parametervergrößerung $\Delta q > \Delta r$ läßt sich aus der Ähnlichkeit dieser Dreiecke ableiten.

Der Fachmann kann somit für jede Bezugszykloide BZ nach Oberbegriff des Anspruches 1 in einfacher Weise nach Kennzeichen des Anspruches 1 eine eindeutige Kurvenscheibenzykloide GZ ausführen.

Die Beziehung für eine Parameterverkleinerung $\Delta q < \Delta r$ kann analog abgeleitet werden.

**Patentansprüche**

1. Verfahren zur Herstellung eines Übersetzungsgetriebes mit mindestens zwei Getrieberädern, - vorzugsweise Planetengetriebe mit mindestens einem mit Hilfe eines Exzenters bewegten Planetenrad und wenigstens einem Zentralrad -, welche beiden Räder über eine an dem einen Rad ausgebildete geschlossene Kurvenscheibenzykloide und an dem anderen Rad ausgebildeten Rollenkranz in Eingriff stehen, dessen Berührungspunkte mit der Kurvenscheibenzykloide Punkte einer verkürzten Zykloide beschreiben, welche mathematisch in Komponentendarstellung x (β) und y (β) mit Anfang der verkürzten Zykloide im Scheitel durch die vier Parameter z, r, e und q, bei EPI-Zykloiden mit oberen Vorzeichen, bei HYPO-Zykloiden mit unteren Vorzeichen wie folgt auszudrücken sind:

$$x = r \cdot \cos\beta/z \; {}^+_+ \; e \cdot \cos(\beta {}^+_- \beta/z) \; {}^+_- \; q \cdot \cos(\gamma {}^+_+ \beta/z);$$
$$y = r \cdot \sin\beta/z \; {}^+_- \; e \cdot \sin(\beta \; {}^+_- \beta/z) \; {}^+_- \; q \cdot \sin(\gamma {}^+_+ \beta/z);$$

wobei das letzte Glied der Komponenten-Gleichung eine Außen-Äquidistante mit q > 0; oder eine Innen-Äquidistante mit q < 0, darstellt,

mit γ als Eingriffswinkel zwischen Kurvennormale und Richtung des Parameters r,

wobei dem einem Rad eine Bezugszykloide zugeordnet und dem anderen Rad ein gegenüber dem Verlauf dieser Bezugszykloide geänderter Zykloiden-Kurvenzug zugeordnet ist, deren Parameter q um $\Delta q$ und r um $\Delta r$ größer sind als die Parameter qB bzw. rB der Bezugszykloide;

$(q = qB + \Delta q;$ bzw. $r = rB + \Delta r;)$ oder, deren Parameter q um $\Delta q$ und r um $\Delta r$ kleiner sind als die Parameter qB und rB der Bezugszykloide; $(q = qB - \Delta q;$ bzw. $r = rB - \Delta r;)$

**dadurch gekennzeichnet,**

daß die Differenz zwischen den Änderungen q und r den Paarungswert "c" und der Quotient dieser Änderungen den Cosinus des maximalen Eingriffswinkel γmax ergibt, wobei c in Abhängigkeit von der geforderten ISO-Qualität und dem Nennmaß 2r nach folgender, teilweise wiedergegebener Normtabelle bestimmt wird:

EP 0 535 109 B1

<u>c - P a a r u n g s w e r t   in μm</u>
<u>zur Bestimmung der optimalen Zykloiden-Getriebe</u>

| Nennmaßbereiche Durchmesser 2 r in mm: | ISO - Qualität: | | | | |
|---|---|---|---|---|---|
| | 5 | 6 | 7 | 8 | 9 |
| 50 bis 80 | 30 | 46 | 74 | 120 | 190 |
| 80 bis 120 | 35 | 54 | 87 | 140 | 220 |
| 120 bis 180 | 40 | 63 | 100 | 160 | 250 |
| 180 bis 250 | 46 | 72 | 115 | 185 | 290 |
| 250 bis 315 | 52 | 81 | 130 | 210 | 320 |
| 315 bis 400 | 57 | 89 | 140 | 230 | 360 |
| 400 bis 500 | 63 | 97 | 155 | 250 | 400 |

2. Verfahren nach Anspruch 1,
**dadurch gekennzeichnet,**
daß für die Fertigung der Kurvenscheibenzykloide und für die Fertigung des Bolzenringes dieselbe ISO-Qualität wie für den geforderten Paarungswert c angewendet wird.

3. Verfahren nach Anspruch 1
**dadurch gekennzeichnet,**
daß für die Fertigung des Bolzenringes eine feinere ISO-Qualität angewendet wird als für den geforderten Paarungswert c.

4. Verfahren nach Anspruch 1,
**dadurch gekennzeichnet,**
daß für die Fertigung der Kurvenscheibenzykloide eine gröbere ISO-Qualität angewendet wird als für den geforderten Paarungswert c.

5. Verfahren nach einem der Ansprüche 1 bis 4,
**dadurch gekennzeichnet,**
daß ein oder mehrere der Werte von c, $\Delta r$ und $\Delta q$ in der Bemessung des Bolzenringes erfaßt sind und insoweit nicht bei der Kurvenscheibenzykloide berücksichtigt werden.

6. Verfahren nach einem der Ansprüche 1 bis 5,
**dadurch gekennzeichnet,**
daß die Beziehungen der Parameter r und q untereinander mit der Differenz zwischen $\Delta q$ und $\Delta r$ gleich c und dem Quotienten $\Delta q$ und $\Delta r$ gleich $\cos \gamma_{max}$ zwangsabhängig gesteuert werden.

7. Verfahren nach Anspruch 6,
**dadurch gekennzeichnet,**
daß die Steuerung mittels eines mechanischen Getriebes erfolgt, dessen Wandlung durch Eingabe des Paarungswertes c bestimmt ist.

**Claims**

1. A process for manufacturing a transmission gearing comprising at least two gear wheels, preferably a planetary gearing having at least one planetary wheel moved by means of an eccentric cam and at least one central wheel, said two gear wheels being in engagement via a closed cam-plate cycloid formed on

5

one wheel and a roller rim formed on the other wheel, whose point of contact with the cam-plate cycloid describe points of a shorter cycloid which may be expressed mathematically as given below in the representation of components x ($\beta$) and $\gamma$ ($\beta$) beginning with the shorter cycloid in the vertex through the four parameters z, r, e and q, epicycloids having an upper sign, hypocycloids having a lower sign:

$$x = r. \cos\beta/z \mp e. \cos (\beta \pm \beta/z) \pm q. \cos(\gamma \mp \beta/z);$$

$$y = r. \sin\beta/z \pm e. \sin (\beta \pm \beta/z) \pm q. \sin (\gamma \mp \beta/z);$$

the last component of the equation being an outer equidistant with q>0, or an inner equidistant with q>0, with y as the angle of engagement between the normal to the curve and the direction of the parameter r, a reference cycloid being associated with one wheel and a cycloidal curve path, which has been changed with respect to the path of said reference cycloid and whose parameter q is greater by $\Delta q$ than the parameter qB of the reference cycloid and whose parameter r is greater by $\Delta r$ than rB of the reference cycloid (q = qB + $\Delta q$; r = rB + $\Delta r$.), or whose parameter q is smaller by $\Delta q$ than the parameter qB of the reference cycloid and whose parameter r is smaller by $\Delta r$ than the parameter rB of the reference cycloid (q = qB - $\Delta q$; r =rB - $\Delta r$;), being associated with the other wheel, characterised in that the difference between the changes of q and r produces the pairing value "c" and the quotient of these changes produces the cosine of the maximum engagement angle $\gamma$max, c being determined as a function of the required ISO-quality and the value of 2r according to the following standard table shown in part:

## c - Pairing value in $\mu$m
## for determining the optimal cycloid gears

| Nominal measuring range Diameter 2 r in mm | ISO Quality 5 | 6 | 7 | 8 | 9 |
|---|---|---|---|---|---|
| 50 to 80 | 30 | 46 | 74 | 120 | 190 |
| 80 to 120 | 35 | 54 | 87 | 140 | 220 |
| 120 to 180 | 40 | 63 | 100 | 160 | 250 |
| 180 to 250 | 46 | 72 | 115 | 185 | 290 |
| 250 to 315 | 52 | 81 | 130 | 210 | 320 |
| 315 to 400 | 57 | 89 | 140 | 230 | 360 |
| 400 to 500 | 63 | 97 | 155 | 250 | 400 |

2. A process according to claim 1, characterised in that for manufacturing the cam-plate cycloids and for manufacturing the bolt ring, the same ISO quality is used as for the required pairing value c.

3. A process according to claim 1, characterised in that for manufacturing the bolt ring a finer ISO quality is used than for the required pairing value c.

4. A process according to claim 1, characterised in that for manufacturing the cam-plate cycloid a coarser ISO-quality is used than for the required pairing value c.

5. A process according to claims 1 to 4, characterised in that one or more of the values of c, $\Delta r$ and $\Delta q$ are used in the dimensioning of the bolt ring and are not taken account of in the cam-plate cycloid.

6. A process according to claims 1 to 5, characterised in that the interrelationships of the parameters r and q with the difference between $\Delta q$ and $\Delta r$ being equal to c and the quotient $\Delta q$ and $\Delta r$ being equal to cos $\gamma$max are functionally controlled.

7. A process according to claim 6, characterised in that the control is effected by means of a mechanical gear whose conversion is determined by the input of the pairing value c.

**Revendications**

1. Procédé de fabrication d'un multiplicateur de vitesse avec au moins deux roues d'engrenage - de préférence engrenage planétaire avec au moins une roue planétaire dont le mouvement est effectué au moyen d'un excentrique et avec au moins une roue centrale - les deux roues étant en engrènement par une cycloïde de disque-came agencée sur l'une des roues et une couronne à galets agencée sur l'autre des roues, dont les points de contact avec la cycloïde de disque-came décrivent des points d'une cycloïde raccourcie, qui doivent être exprimés mathématiquement sous forme de présentation de composantes x (β) et y (β) avec début de la cycloïde raccourcie dans le sommet par les quatres paramètres z, r, e et q, en cas de cycloïdes EPI avec des signes supérieurs, en cas de cycloïdes HYPO avec des signes inférieurs, de manière suivante:

$$x = r \cdot \cos\beta/z \; {}^+_+ \; e \cdot \cos(\beta \pm \beta/z) - q \cdot \cos(\gamma {}^+_+ \beta/z);$$
$$y = r \cdot \sin\beta/z \pm e \cdot \sin(\beta \pm B/z) - q \cdot \sin(\gamma {}^+_+ \beta/z);$$

le dernier terme de l'équation par composante présentant une équidistante extérieure avec q > 0; ou une équidistante intérieure avec q < 0,

avec γ comme l'angle d'engrenage entre la normale de courbe et la direction du paramètre r,

l'une des roues ayant assignée une cycloïde de référence et l'autre des roues ayant assigné un trait courbe de cycloïde changé par rapport au cours de cette cycloïde, dont les paramètres q et r sont supérieurs aux paramètres qB et rB de la cycloïde de référence par Δq et Δr;

(q = qB + Δq; respectivement r = rB + Δr);) ou dont les paramètres q et r sont inférieurs aux paramètres qB et rB de la cycloïde de référence par Δq et Δr; (q = qB - Δq; respectivement r = rB - Δr);

caractérisé en ce que la différence entre les modifications q et r rapporte le valeur d'appariement "c" et le quotient de ces modifications rapporte le cosinus de l'angle d'engrenage maximum γmax, c étant déterminé dépendant de la qualité ISO requise et la dimension nominale 2r, selon la table normalisée suivante en reproduction partielle:

## valeur d'appariement "c" en μm
## pour la détermination des engrenages cycloïdals optimales

| Gammes des dimensions diamètre 2 r en mm: | | | qualité ISO: | | | | |
|---|---|---|---|---|---|---|---|
| | | | 5 | 6 | 7 | 8 | 9 |
| 50 | à | 80 | 30 | 46 | 74 | 129 | 190 |
| 80 | à | 120 | 35 | 54 | 87 | 140 | 220 |
| 120 | à | 180 | 40 | 63 | 100 | 160 | 250 |
| 180 | à | 250 | 46 | 72 | 115 | 185 | 290 |
| 250 | à | 315 | 52 | 81 | 130 | 210 | 320 |
| 315 | à | 400 | 57 | 89 | 140 | 230 | 360 |
| 400 | à | 500 | 63 | 97 | 155 | 250 | 400 |

2. Procédé selon la revendication 1, caractérisé en ce que pour la fabrication de la cycloïde de disque-came et pour la fabrication de la bague-boulon on applique la même qualité ISO que pour le valeur d'appariement c requis.

3. Procédé selon la revendication 1, caractérisé en ce que pour la fabrication de la bague-boulon on applique une qualité ISO plus fine que celle pour le valeur d'appariement c.

4.  Procédé selon la revendication 1, caractérisé en ce que pour la fabrication de la cycloïde de disque-came on applique une qualité ISO plus grosse que celle pour le valeur d'appariement c requis.

5.  Procédé selon l'une quelconque des revendications 1 à 4, caractérisé en ce qu'un ou plusieurs des valeurs de c, $\Delta$r et $\Delta$q sont captés dans le dimensionnement de la bague-boulon tel qu'ils ne sont pas considérés dans la cycloïde de disque-came.

6.  Procédé selon la revendication 1 à 5, caractérisé en ce que les relations des paramètres r et q entre eux avec la différence entre $\Delta$q et $\Delta$r égales à c et le quotient $\Delta$q et $\Delta$r égales a cos $\gamma$max sont commandés de manière dépendante coercitive.

7.  Procédé selon la revendication 6, caractérisé en ce que la commande est effectuée au moyen d'un engrenage mécanique, changement duquel étant déterminé par l'introduction du valeur d'appariement c.

Fig.1

4
11
11.1
20
19
17
7
13.1
16

13

Fig.2

22 13.1 24 21.1 7 7.1 1 1.1 26 17 20 31 30 32 17.1

28
11.1
11
13
16
11.2
28

O

28

4

28

13.2 25 7.2 27 27.1

O

6 19 21 17.2 23

Fig. 3

Fig. 4

Fig.5